# EUROPÄISCHE PATENTSCHRIFT

(11) **EP 2 145 840 B1**
(45) Veröffentlichungstag und Bekanntmachung des Hinweises auf die Patenterteilung: **30.11.2011**
(21) Anmeldenummer: 08075645.5
(22) Anmeldetag: 18.07.2008
(51) Int. Cl.: B65D 88/58, B65D 88/64

(54) **Auflockerung von rieselfähigen Medien in Silos und Behältern**
Breaking up free flowing media in silos and containers
Désagrégation de fluides pouvant s'écouler dans des silos et des récipients

(43) Veröffentlichungstag der Anmeldung: 20.01.2010
(60) Teilanmeldung: 11075085.8
(73) Patentinhaber: Deutsche Amphibolin-Werke von Robert Murjahn Stiftung & Co KG, 64372 Ober-Ramstadt (DE)
(72) Erfinder: Schäfer, Heinz, 36208 Wildeck-Richelsdorf (DE); Rimbach, Frank, 36214 Nentershausen (DE); Linss, Jürgen, 36208 Wildeck-Richelsdorf (DE); Schösse, Klaus, 36208 Wildeck-Bosserode (DE)
(74) Vertreter: Pfenning, Meinig & Partner GbR

(56) Entgegenhaltungen:
- EP-A- 1 688 176
- WO-A-96/37421
- DE-A1- 4 217 329
- DE-B- 1 275 469
- DE-U1- 9 114 427
- DE-U1-202004 010 486

## Beschreibung

Die vorliegende Erfindung betrifft einen Container zum Befüllen mit flüssigem, pastösem, pulvrigem und/oder rieselförmigem Füllgut.

Container zum Befüllen mit pulvrigem und/oder rieselförmigem Füllgut sind prinzipiell bekannt. Diese werden beispielsweise in Form von Stahlsilos auf Baustellen verwendet, um einen Mindestbestand an diesem Füllgut auf der Baustelle sicherzustellen.

Außerdem bekannt sind Einwegcontainer, die beispielsweise auch rieselförmiges Füllgut enthalten können.

Nachteilig an den bekannten Containern ist, dass insbesondere nach einem längeren Transport des befüllten Containers eine Verdichtung rieselförmigen Gutes stattgefunden hat, so dass eine gleichförmige Entnahme von Füllgut, etwa mittels einer in das Füllgut hineingesteckten Förderschnecke, schwer möglich ist. Bisher werden zur Sicherstellung der gleichmäßigen Entnahme sogenannte "Rüttler" eingesetzt, die ein gleichförmiges Fördern des Füllgutes, bedingt durch die Auflockerung des Füllgutes beim Rütteln, bewirken.

Die deutsche Auslegeschrift DE 1 275 469 B betrifft einen Silobehälter für körniges Mischgut, mit einem Auslauftrichter und einem koaxialen Inneren und starrem Kegelkörper, der in einer an der Innenwand des Silos befindlichen Führung auf- und abbewegbar ist. Der Kegelkörper ist hierbei ein mit seiner Spitze nach oben weisender Einfachkegel, dessen unterer Rand mit dem Auslauftrichter einen entsprechend der Höhenlage des Kegelkörpers verstellbaren schmalen Durchtrittsspalt bildet, der im Betrieb entsprechend den Korngrößen und/oder dem spezifischen Gewicht des abzulassenden Mischgutes eingestellt wird.

Die WO 96/37421 A1 betrifft eine Containeranordnung mit einem oberen Abschnitt und einem unteren Abschnitt sowie eine Versteifungsstruktur, in der ein Auslass gegeben ist, wobei der Auslass durch Verschieben einer Platte nach unten hin geöffnet werden kann.

Das deutsche Gebrauchsmuster G 91 14 427 U1 beschreibt eine Siloeinheit für schütt- oder fließfähiges Gut, wobei mindestens zwei gleich ausgeführte, aufeinandergesetzte, miteinander verbundene und aneinander gesicherte Silobehälter vorgesehen sind, von denen der unterste auf einem separaten Untergestell sitzt und mit diesem fest verbindbar ist. Die DE 42 17 329 A1, die auf denselben Anmelder wie die vorgenannte G 91 14 427 U1 zurückgeht, beschreibt eine Siloeinheit für schütt- oder fließfähiges Gut, die ein Untergestell und mindestens einen, vorzugsweise jedoch zwei bis maximal vier oder fünf Silobehälter mit jeweils einem Fassungsvermögen von etwa 1 m³ aufweist, wobei der einzige bzw. der untere bei mehreren baugleich ausgeführten Silobehältern auf das Untergestell gesetzt und mit diesem fest verbunden ist und wobei nach dem Aufeinandersetzen von zwei oder maximal vier bis fünf Silobehältern diese miteinander verbunden und aneinander gesichert sind. Bei jedem der in Draufsicht etwa quadratischen Silobehälter sind vier seitliche Stützen an den vier Ecken an den oberen Ecken mit einer geschlossenen, versteiften Abdeckung mit einer mittig angeordneten verschließbaren Füllöffnung und an ihren unteren Enden mit einem an den Tragstützen angebrachten Rahmen mit einer mittig unter der Füllöffnung angeordneten und verschließbaren Austrittsöffnung versehen. Im oberen Bereich des Silobehälters sind an den Tragstützen Seitenbleche befestigt, die im unteren Bereich des Silobehälters in einen nach unten gerichteten, konusförmigen Trichter übergehen, welcher an der Austrittsöffnung endet.

Der vorliegenden Erfindung liegt die Aufgabe zugrunde, einen Container zur Befüllung mit insbesondere pulvrigem und/oder rieselförmigem Füllgut zur Verfügung zu stellen, wobei ohne aufwendige Anlagentechnik eine gleichförmige und sichere Entnahme des Füllguts möglich ist.

Diese Aufgabe wird durch einen Container nach Anspruch 1 bzw. ein Fördersystem nach Anspruch 15 gelöst.

Der erfindungsgemäße Container zum Befüllen mit flüssigem, pastösem, pulvrigem und/oder rieselförmigem Füllgut hat in einem Bereich oberhalb eines Zwischenbodens des Containers zur Anfangsbefüllung mit dem Füllgut und unterhalb des Zwischenbodens einen Sammelbereich, der mit einer Auslauföffnung am Mantel des Containers verbunden ist. "Am Mantel des Containers" meint hierbei vorzugsweise eine seitliche Herausführung der Auslauföffnung, da hierdurch die Zugänglichkeit zum Füllgut erleichtert ist, ohne dass die Höhe des Containers zu groß angenommen werden muss.

Der Zwischenboden ist mittels einer Lösevorrichtung teilbar zum Befüllen des Sammelbereichs mit dem Füllgut. Das heißt, dass durch Betätigen der Lösevorrichtung der Zwischenboden sich teilt bzw. zerrissen wird und hierdurch das Füllgut "eine Etage tiefer fällt", d. h. in den Sammelbereich, wo es beispielsweise von einer Förderschnecke entnommen werden kann.

Vorteil dieser Ausführungsvariante ist, dass ein sich während des Transportes aufgrund stetiger Erschütterungen verfestigtes Füllgut, das oberhalb des Zwischenbodens eine höhere Dichte aufweist, nun durch das zusätzliche Volumen sich "auflockern" kann. Außerdem wird durch das von oben nachrieselnde/nachlaufende Füllgut eine vermischung erreicht, so dass gebrauchsfertiges Füllgut direkt mit einer Schnecke entnommen werden kann, ohne dass zusätzliche Auflockerungen beispielsweise durch einen extern an den Mantel des Containers angebrachten Rüttler erfolgen müssen.

Das erfindungsgemäße Fördersystem sieht vor, dass zusätzlich zu dem oben beschriebenen Container eine Fördervorrichtung vorgesehen ist zum Herausfördern des Füllguts aus dem Container, diese kann beispielsweise mit einem Elektromotor versehen sein, so dass hierdurch eine autarke Einheit zum Bereitstellen von Füllgut in der gewünschten Qualität gegeben ist. Außerdem ist es möglich, dass an diese Fördervorrichtung (beispielsweise eine solche für pulvriges Material) anschließend eine Wasserzuleitung mit einer Pumpe für darin gemischtes pastöses Medium zur Verfügung gestellt wird, so dass unter geringstmöglichen Transportkosten (lediglich Transport der Trockenmasse notwendig) pastöses Material zum direkten Weiterverarbeiten auf der Baustelle zur Verfügung gestellt wird.

Der zwischenboden besteht aus einem biegsamen Material wie Pappe, Kunststoff oder Metallfolie. Bei diesen Materialien wird die Kontur der Lage im unteren Bereich durch das gewichtige Füllgut bestimmt, es ist hier also eine "Ausbauchung" zum Sammelbereich hin zu erwarten.

Vorteilhafte Weiterbildungen werden in den abhängigen Ansprüchen angegeben.

Eine vorteilhafte Weiterbildung sieht vor, dass der Container im horizontalen Querschnitt rund oder mehreckig ist. Hierbei bietet sich bei angestrebtem größtmöglichem Volumen eine runde Bauform an, die mehreckige Bauform bietet sich insbesondere beim Zusammenstellen mehrerer Containereinheiten nebeneinander bzw. bei einem Containermantel aus einem Faltquerschnitt bzw. Platten an.

Eine weitere vorteilhafte Weiterbildung sieht vor, dass der Sammelbereich durch ein Gefache oder eine andere Stützstruktur abgestützt ist. Hierdurch wird ein definiertes und dauerhaftes Gefälle im Sammelbereich bzw. darüber sichergestellt. Der Sammelbereich ist hierbei vorzugsweise konisch oder V-förmig, es sind hier jedoch auch jegliche anderen Bauformen (beispielsweise die Form eines auf dem Kopf stehenden Pyramidenstumpfes etc.) möglich. Wichtig ist, dass eine "kanalisierung" zu einem bestimmten Punkt oder zu einer bestimmten Linie/Rinne hin erfolgt.

Eine weitere vorteilhafte Weiterbildung sieht vor, dass der Mantel des Containers aus Faltmaterial, insbesondere Wellpappe oder Wellkunststoff besteht. Dies ermöglicht sehr geringe Produktionskosten, außerdem ist die Recycelbarkeit dieser Materialien (beispielsweise über ein Wertstofferfassungssystem) sehr günstig. Vorteilhaft ist außerdem, dass bei einem Abhandenkommen des Containers der verlorene Wert primär in dem Füllgut besteht, da die übrigen Kosten relativ gering sind.

Der vorliegende Container kann allerdings auch aus im Wesentlichen biegesteifem Plattenmaterial, beispielsweise aus Holz oder Metall bzw. auch aus Metallzylindern, bestehen. Möglich ist auch ein Herstellen aus Kunststoff, beispielsweise aus Dämmplatten, wie sie zum Eindämmen einer Fassade verwendet werden. Hierdurch ist sogar ein "Direktrecycling" des Containers nach Entleerung des Füllgutes möglich.

Je nach Ausführungsform kann auch die Lösevorrichtung des Containers unterschiedlich ausgeführt sein.

Vorteilhaft ist allerdings in jedem Fall, dass die Lösevorrichtung vom Äußeren des Containers her betätigbar ist, insbesondere vom Mantelbereich des Containers aus, beispielsweise im Bereich einer seitlichen Auslauföffnung.

Je nach Ausführungsform kann der Öffnungsvorgang hier reversibel oder irreversibel sein. Irreversibel ist der Vorgang beispielsweise dann, wenn der Zwischenboden durch Betätigung der Lösevorrichtung zerschnitten oder aufgetrennt wird, beispielsweise bei einem Herausziehen eines Metalldrahtes, der stellenweise mit einem Zusatzboden aus Pappe oder Kunststofffolie verklebt ist. Es gibt allerdings auch reversible Formen, die (in einer Weiterbildung) sogar ein Wiederverschließen des Zwischenbodens vorsehen, falls beispielsweise ein Weitertransport an eine andere Baustelle erfolgen soll, bevor das Füllgut vollkommen entleert ist. Andere reversible Zwischenböden sehen vor, dass zumindest bei einer Wiederbefüllung der Zwischenboden wiederverwendet werden kann. Dies ist beispielsweise der Fall, wenn ein wiederverschließbarer Reißverschluss zwischen zwei Abschnitten des Zwischenbodens gegeben ist oder auch wenn beispielsweise durch ein Zusatzbauteil wie eine Haltestange zwei Metallfolien des Zwischenbodens miteinander gefügt sind.

Alternativ dazu ist es beim Zwischenboden auch möglich, dass dieser als eine einzige Folie / ein Wellplattenabschnitt bereitgestellt wird und entlang einer Trennlinie zum angrenzenden Containerbereich eine Öffnung/Trennung möglich ist, d. h. dass der Zwischenboden selbst nicht durchtrennt werden muss, sondern lediglich an zumindest einer Stelle eine Fügung aufgehoben wird, so dass das Füllgut vom Zwischenboden in den Sammelbereich hinuntergleiten kann.

Die Lösevorrichtung bzw. der Zwischenboden können in einer vorteilhaften Weiterbildung unterschiedlich gestaltet sein. Die Auftrennung des Zwischenbodens erfolgt beispielsweise entlang einer vorzugsweise geraden Linie. Dies ist beispielsweise von Vorteil, wenn der Sammelbereich V-förmig entlang einer Linie (= Rinne) verläuft. Bei einem konischen Sammelbereich kann es auch vorteilhaft sein, dass der Zwischenboden entlang eines Punktes sich öffnet, so dass die Form des Zwischenbodens und seine Öffnung an den konusförmigen Sammelbereich besser angepasst sind.

Die Auslauföffnung am Mantel des Containers sollte so ausgeführt sein, dass eine Förderschraube oder auch Förderschnecke zur Auflockerung und Entnahme des Füllguts in die Auslauföffnung einführbar ist und auch am Mantel bzw. der Auslauföffnung fixierbar ist.

Weitere vorteilhafte Weiterbildungen werden in den abhängigen Ansprüchen beschrieben.

Die Erfindung wird nun anhand mehrerer Figuren erläutert. Es zeigen:
- Fign. 1a und 1b: zwei Ansichten einer ersten Aus- führungsform eines erfindungsgemäßen Containers,
- Fign. 2a und 2b: Teilfreischnitte eines Containers nach den Fign. 1a und 1b mit Dar- stellung des Bereichs von Zwischen- boden und Sammelbereich,
- Fign. 3a bis 3d: schematische Zeichnungen von Ver- läufen bzw. Punkten, an denen die Öffnung des Zwischenbodens erfolgt,
- Fign. 4a und 4b: Ansichten bzw. Schnitte eines er- findungsgemäßen Fördersystems mit einer zweiten Ausführungsform eines erfindungsgemäßen Containers.

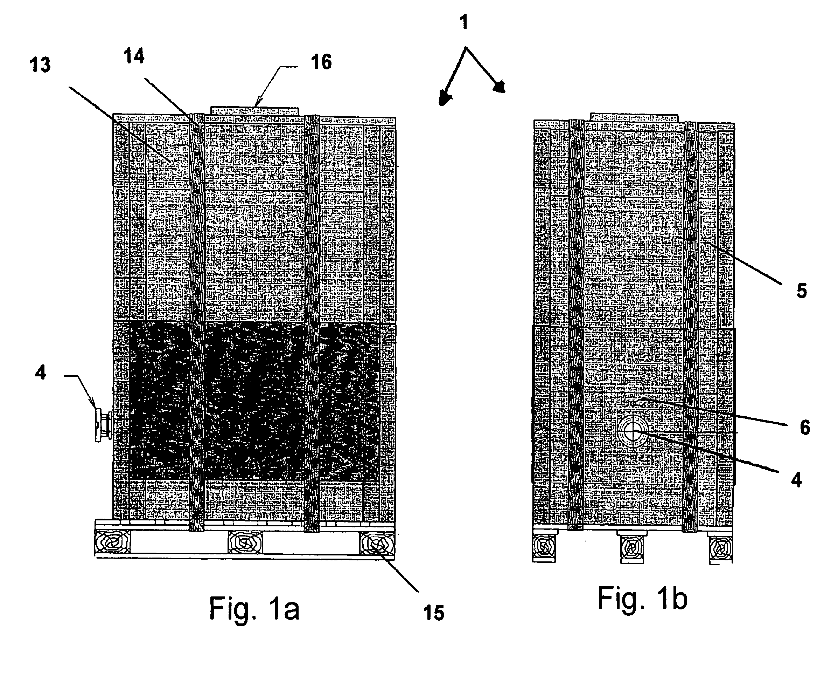

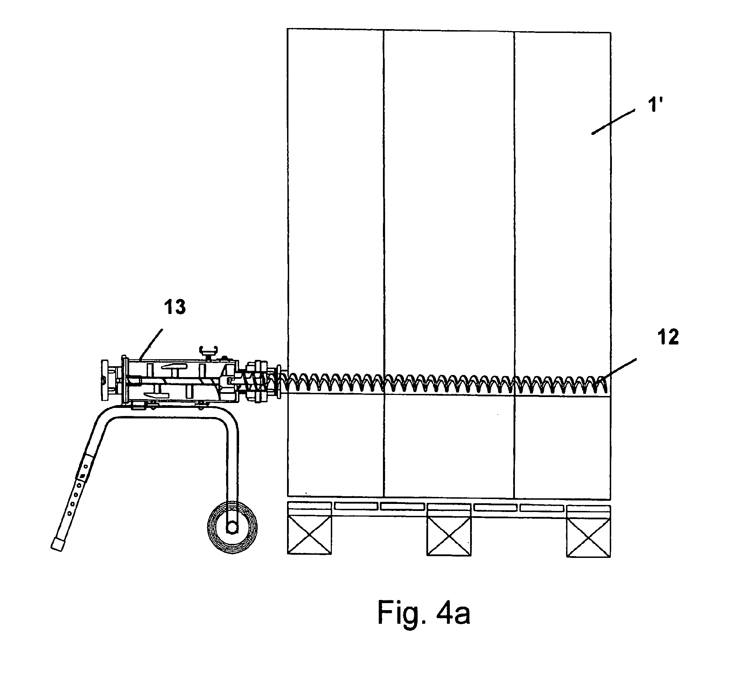

Fig. 1a zeigt einen Container 1, der aus Dämmplatten 13 zusammengesetzt ist, die an der Baustelle direkt recycelt werden können (d. h. als Wärmedämmplatten an einer Fassade weiterverwendet werden können). Der Container 1 verfügt über Spanngurte 14, die den Container mit einer darunter liegenden Europalette 15 verspannen. In Fig. 1a linksseitig ist eine Auslauföffnung 4 gezeigt, an die ein Schlauch oder eine Fördervorrichtung (s. dazu beispielsweise Fig. 4a) mit einer Schnellkupplung oder auch über ein Gewinde angebunden werden kann.

Der Container 1 aus Fig. 1a hat eine Quaderform und auf seiner Oberseite eine Einfüllöffnung 16, die mit Füllgut (flüssigem, pastösem, pulvrigem und/oder riezelförmigem Füllgut) beladen werden kann.

Fig. 1b zeigt eine Frontansicht des Containers aus Fig. 1a, wobei oberhalb der Auslauföffnung 4 ein Betätigungselement einer Lösevorrichtung 6 gezeigt ist, auf die weiter unten nochmals eingegangen wird. Sowohl Auslauföffnung 4 als auch Betätigungselement für die Lösevorrichtung 6 sind seitlich am Container, d. h. am Mantel 5 des Containers angebracht.

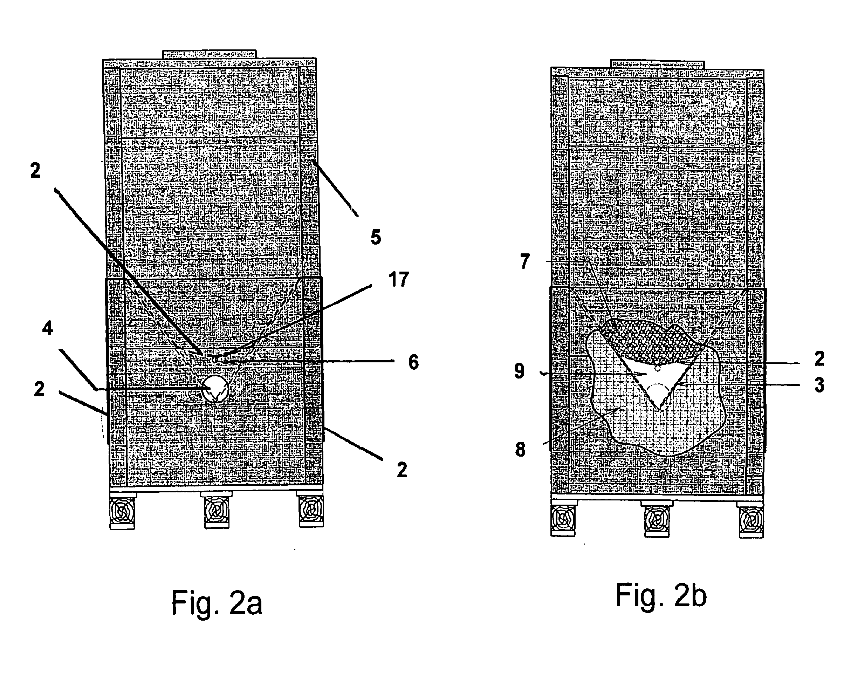

Fig. 2a zeigt eine transparente bzw, teilgeschnittene Version des Containers aus den Fign. 1a und 1b.

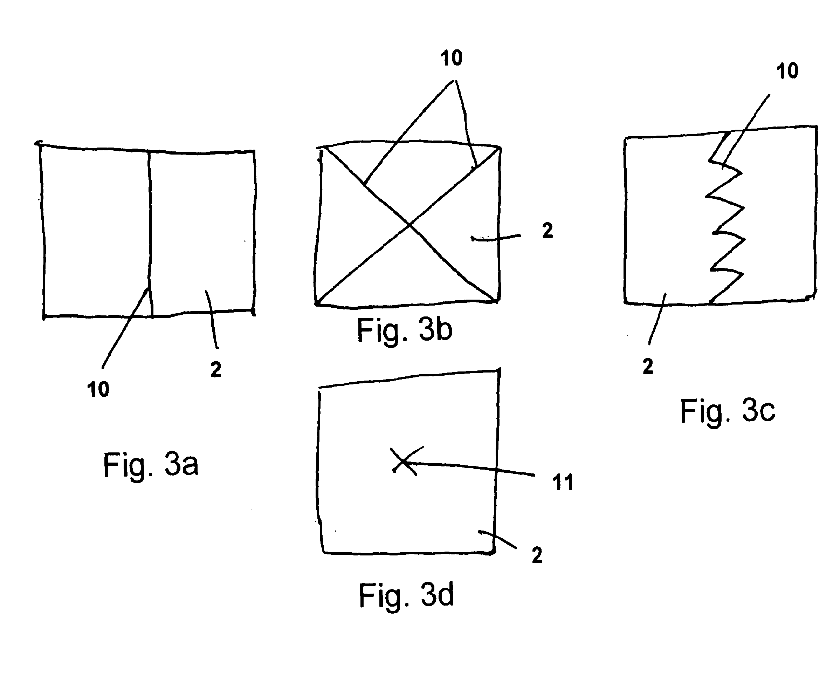

Eine Auslauföffnung 4 ist etwa auf Höhe des untersten Punktes des Sammelbereichs 3 (noch besser zu sehen in Fig. 2b) gezeigt. Oberhalb dieses Höhenniveaus ist ein Zwischenboden 2 aus einem folienartigen Material (beispielsweise Kunststofffolie) gezeigt. Oberhalb dieses Zwischenbodens ist pulvriges bzw. riegelförmiges Füllgut 7 angeordnet, das durch seine Gewichtseinwirkung die in den Fign. 2a und 2b gezeigte Kontur der Lage vorgibt. In Tiefenrichtung (d. h. senkrecht zur Blattebene) ist ein Draht 17 eingebracht, der durch ziehen an der Lösevorrichtung den Zwischenboden 2 entlang einer Linie (s. beispielsweise Linie 10 in Fig. 3a) öffnet, damit das Füllgut 7 so in aufgelockerter bzw. vermischter Form in den Sammelbereich 3 fallen kann.

Alternativ zum Hohlraum 9 kann hier auch eine zweite Phase (d. h. ein anderes Material) vorgesehen sein, das nach Trennen des Zwischenbodens eine neue Verbindung mit dem darüberliegenden Füllgut 7 eingeht.

Gezeigt ist somit ein Container 1 zum Befüllen mit flüssigem, pastösem, pulvrigem und/oder rieselförmigem Füllgut in einen Bereich oberhalb eines zwischenbodens 2 des Containers, wobei der Container unterhalb des Zwischenbodens einen Sammelbereich 3 aufweist, der mit einer Auslauföffnung 4 am Mantel 5 des Containers verbunden ist, und der Zwischenboden mittels einer Lösevorrichtung teilbar ist zum Befüllen des Sammelbereichs mit dem Füllgut.

Der Sammelbereich 3 ist vorliegend V-förmig und auch (in Tiefenrichtung des Blattes, wie in den Fign. 2a und 2b gezeigt) gleichförmig, so dass der Winkel des "V" in jedem Schnitt gleich ist. Alternativ kann hier auch eine konische Form gewählt werden.

Der Zwischenboden 2, der in den Fign. 2a und 2b im Querschnitt zu sehen ist, wird oberhalb V-förmigen Bereichs bzw. oberhalb des Sammelbereichs seitlich aus dem Mantel 5 des Containers herausgeführt und liegt dann an den Seiten links und rechts nach unten hin weisend an. Somit ergibt sich im in den Fign. 2a und 2b gezeigten Querschnitt die Form eines "M". Eine Fixierung der Lage erfolgt hierbei durch den oberen Abschnitt des Mantels 5, der die Lage des Zwischenbodens 2 fixiert. Zusätzlicher Halt erfolgt noch durch eine Folienumwicklung des Gesamtmantels 5, der zum Wetterschutz bzw. zur Versiegelung des Containers 1 vorgesehen ist.

Die Fign. 3a bis 3d zeigen verschiedene Verläufe von Öffnungslinien 10 bzw. Öffnungspunkten 11 des Zwischenbodens 2.

Hierbei ist jeweils die Perspektive X aus Fig. 2b heranzuziehen, wobei kein Deckel bzw. eine offene Füllöffnung 16 angenommen wird.

In Fig. 3a ist eine gerade Linie vorgesehen, in Fig. 3b sind zwei sich kreuzende Linien vorgesehen (dies ergibt eine pyramidenförmige Ausprägung des Zwischenbodens, eventuell mit ausgebauchten seitenflächen der Pyramide), Fig. 3c zeigt einen Zickzackverlauf der Linie, Fig. 3d zeigt einen punktförmigen Zustand (Punkt 11) des zu öffnenden Bereiches. Diese verschiedenen öffnungsvarianten können auf den darunterliegenden Sammelbereich abgestimmt werden.

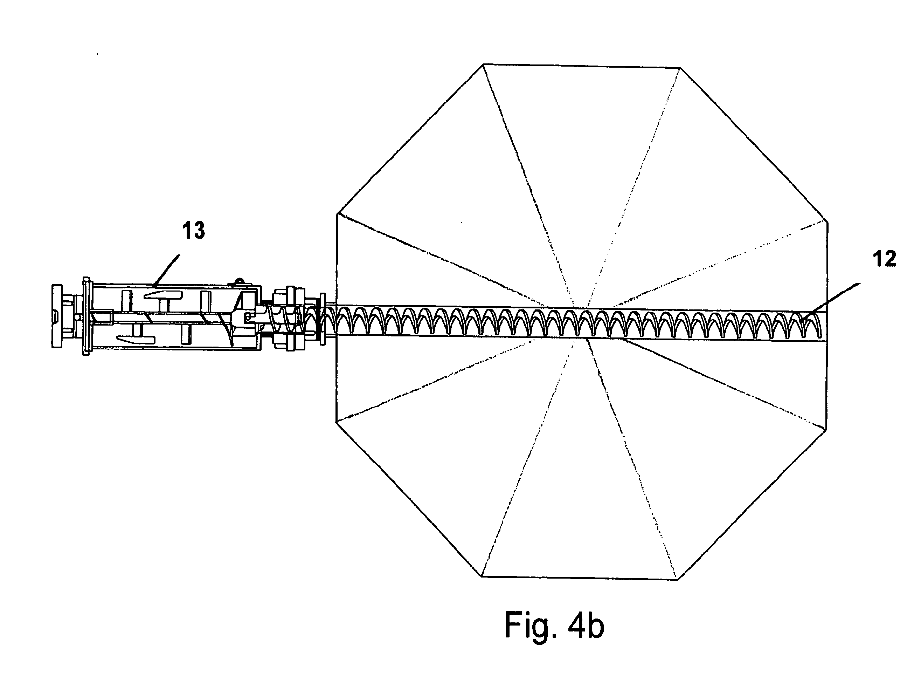

Die Fign. 4a und 4b zeigen ein Gesamtsystem, bei dem eine Fördervorrichtung 13 mit einem erfindungsgemäßen Container (gezeigt ist eine abgewandelte Ausführungsform des Containers 1') zusammenwirkt.

Die Fördervorrichtung 13 ist an einen Elektromotor anschließbar und weist eine Förderschnecke 12 auf, die in den Container (vor Öffnen des Zwischenbodens 2 und Befüllen des Sammelbereiches 3 mit Füllgut 7) eingeführt werden kann. Hierdurch ist eine genaue Positionierung möglich und keine mechanische Beschädigung bzw. kein großer Kraftaufwand beim Einführen der Förderschnecke mehr nötig. Außerdem wird hierdurch gewährleistet, dass während des Transportes eventuell verdichtetes Füllgut 7 nach Betätigung der Lösevorrichtung 6 in den Sammelbereich hinunterfällt (dieser ist in den Fign. 4a und 4b aufgrund des achteckigen Querschnittes des Containers angenähert konusförmig, eher sternförmig). Die Fördervorrichtung fördert dann, eventuell unter Beimengung von Wasser und Herstellung eines pastösen Mediums, pulver- bzw. rieselförmiges Material aus dem Container 1', das dann sofort an der Baustelle weiterverarbeitet werden kann.

## Patentansprüche

1. Container (1) zum Befüllen mit flüssigem, pastösem, pulverigem und/oder rieselförmigem Füllgut (7) in einen
Bereich oberhalb eines Zwischenbodens (2) des Containers, wobei der Container unterhalb des Zwischenbodens einen Sammelbereich (3) aufweist, der mit einer Auslauföffnung (4) am Mantel (5) des Containers verbunden ist und der Zwischenbonden mittels einer Lösevorrichtung (6) teilbar ist zum Befüllen des Sammelbereichs mit dem Füllgut, **dadurch gekennzeichnet, dass** der Zwischenboden (2) aus einem biegsamen Material wie Pappe, Kunststoff, Metallfolie besteht.

2. Container nach Anspruch 1, **dadurch gekennzeichnet, dass** der Container (1) im horizontalen Querschnitt rund oder mehreckig ist.

3. Container nach einem der vorhergehenden Ansprüche, **dadurch gekennzeichnet, dass** der Sammelbereich (3) durch ein Gefache oder eine andere Stützstruktur abgestützt ist.

4. Container nach einem der vorhergehenden Ansprüche, **dadurch gekennzeichnet, dass** der Sammelbereich (3) konisch oder v-förmig ausgeführt ist.

5. Container nach einem der vorhergehenden Ansprüche, **dadurch gekennzeichnet, dass** der Mantel (5) des Containers aus Faltmaterial, insbesondere Wellpappe oder Wellkunststoff besteht.

6. Container nach einem der Ansprüche 1 bis 4, **dadurch gekennzeichnet, dass** der Mantel (5) des Containers aus im Wesentlichen biegesteifem Plattenmaterial, insbesondere Holz, Metall oder Kunststoff besteht.

7. Container nach Anspruch 1, **dadurch gekennzeichnet, dass** das Material des Zwischenbodens (2) als Lage bzw. Folie oberhalb des Sammelbereichs (3) aufgelegt ist, so dass im ungeöffneten Anfangszustand des Zwischenbodens (2) ein Hohlraum (9) zum Sammelbereich (3) hin verbleibt.

8. Container nach einem der vorhergehenden Ansprüche, **dadurch gekennzeichnet, dass** die Lösevorrichtung (6) vom Äußeren des Containers (1) her betätigbar ist.

9. Container nach einem der vorhergehenden Ansprüche, **dadurch gekennzeichnet, dass** der Öffnungsvorgang am Zwischenboden (2) reversibel oder irreversibel ist.

10. Container nach einem der vorhergehenden Ansprüche, **dadurch gekennzeichnet, dass** die Lösevorrichtung (6) derart konzipiert ist, dass der Zwischenboden (2) zerschnitten, über einen Reißverschluss getrennt oder durch Herausziehen eines Zusatzbauteils wie beispielsweise einer Haltestange oder dergleichen geöffnet wird.

11. Container nach einem der vorhergehenden Ansprüche, **dadurch gekennzeichnet, dass** Lösevorrichtung (6) und Zwischenboden (2) derart gestaltet sind, dass die Auftrennung des Zwischenbodens entlang einer vorzugsweise geraden Linie (10) oder an einem Punkt (11) möglich ist.

12. Container nach einem der vorhergehenden Ansprüche, **dadurch gekennzeichnet, dass** die Auslauföffnung (4) am Mantel (5) des Containers (1) so ausgeführt ist, dass eine Förderschraube oder eine Förderschnecke (12) zur Auflockerung und Entnahme des Füllguts (7) in die Auslauföffnung einführbar ist.

13. Fördersystem zur Bereitstellung pastösen, flüssigen, pulverigen oder rieselförmigen Füllguts (7), enthaltend einen Container (1) nach einem der vorhergehenden Ansprüche und zusätzlich eine Fördervorrichtung (13) zum Herausfördern des Füllguts aus dem Container.

## Claims

1. A container (1) for filling with liquid, pasty, powdery and/or free-flowing filling material (7) into a region above an intermediate floor (2) of the container, wherein the container has a collection region (3) beneath the intermediate floor which is connected to an outlet opening (4) at the jacket (5) of the container and the intermediate floor can be divided by means of a release apparatus (6) for filling the collection region with the filling material, **characterised in that** the intermediate floor (2) comprises a flexible material such as board, plastic or metal film.

2. A container in accordance with claim 1, **characterised in that** the container (1) is round or polygonal in horizontal cross-section.

3. A container in accordance with one of the preceding claims, **characterised in that** the collection region (3) is supported by a partition or by another support structure.

4. A container in accordance with one of the preceding claims, **characterised in that** the collection region (3) is conical or V-shaped.

5. A container in accordance with one of the preceding claims, **characterised in that** the jacket (5) of the container comprises folding material, in particular corrugated cardboard or corrugated plastic.

6. A container in accordance with one of the claims 1 to 4, **characterised in that** the jacket (5) of the container substantially comprises bending-resistant panel material, in particular wood, metal or plastic.

7. A container in accordance with claim 1, **characterised in that** the material of the intermediate floor (2) is designed as a layer or as a film above the collection region (3) so that a hollow space (9) remains toward the collection region (3) in the unopened initial state of the intermediate floor (2).

8. A container in accordance with one of the preceding claims, **characterised in that** the release apparatus (6) is actuable from the outside of the container (1).

9. A container in accordance with one of the preceding claims, **characterised in that** the opening procedure at the intermediate floor (2) is reversible or irreversible.

10. A container in accordance with one of the preceding claims, **characterised in that** the release apparatus (6) is designed so that the intermediate floor (2) is divided by cutting, is separated by a zip or is opened by removing an additional component such as a holding bar or the like.

11. A container in accordance with one of the preceding claims, **characterised in that** the release apparatus (6) and the intermediate floor (2) are designed so that the separation of the intermediate floor is possible along a preferably straight line (10) or at a point (11).

12. A container in accordance with one of the preceding claims, **characterised in that** the outlet opening (4) at the jacket (5) of the container (1) is designed so that a conveying screw or a conveying worm (12) can be introduced into the outlet opening for loosening and removing the filling material (7).

13. A conveying system for providing pasty, liquid, powdery or free-flowing filling material (7), comprising a container (1) in accordance with one of the preceding claims and additionally a conveying apparatus (13) for conveying the filling material out of the container.

## Revendications

1. Container (1) à remplir avec un produit de remplissage (7) liquide, pâteux, pulvérulent et /ou fluides
placé dans un domaine de remplissage situé au-dessus d'une cloison intermédiaire (2) du container,
où le container est pourvu d'un domaine collecteur (3) relié à une ouverture de sortie (4) ménagée dans le manteau (5) du container et où la cloison intermédiaire est sécable grâce à un dispositif de relâchement (6) en vue du remplissage du domaine collecteur par le produit de remplissage, **caractérisé en ce que** la cloison intermédiaire (2) est faite d'un matériau souple comme du carton, de la matière plastique, du film métallique.

2. Container selon la revendication 1, **caractérisé en ce que** le container (1) a une section horizontale circulaire ou polyédrique.

3. Container selon l'une des revendications précédentes, **caractérisé en ce que** le domaine collecteur (3) est soutenu par des croisillons ou une autre structure de support.

4. Container selon l'une des revendications précédentes, **caractérisé en ce que** le domaine collecteur (3) est réalisé sous une forme conique ou en V.

5. Container selon l'une des revendications précédentes, **caractérisé en ce que** le manteau (5) du container est fait d'un matériau pliable, particulièrement de carton ondulé ou de matière plastique ondulée.

6. Container selon l'une des revendications 1 à 4, **caractérisé en ce que** le manteau (5) du container est constitué pour l'essentiel d'un matériau en plaques, particulièrement de bois, de métal ou de matière plastique.

7. Container selon la revendication 1, **caractérisé en ce que** le matériau de la cloison intermédiaire (2) est placé au-dessus du domaine collecteur (3) comme couche ou bien comme film, si bien que, dans l'état initial non-ouvert de la cloison intermédiaire (2), puisse rester un espace vide (9) qui constituera le domaine collecteur (3).

8. Container selon l'une des revendications précédentes, **caractérisé en ce que** le dispositif de relâchement (6) est déclenchable depuis l'extérieur du container (1).

9. Container selon l'une des revendications précédentes, **caractérisé en ce que** le dispositif d'ouverture au niveau de la cloison intermédiaire (2) est réversible ou bien irréversible.

10. Container selon l'une des revendications précédentes, **caractérisé en ce que** le dispositif de relâchement (6) est conçu de telle sorte que la cloison intermédiaire (2) peut être déchirée, fendue en deux grâce à une fermeture à glissière, ou ouverte grâce à l'extraction d'une pièce de construction supplémentaire comme par exemple une tige de retenue.

11. Container selon l'une des revendications précédentes, **caractérisé en ce que** le dispositif de relâchement (6) et la cloison intermédiaire (2) sont conçus de telle façon que l'ouverture de la cloison intermédiaire peut se produire le long d'une ligne de préférence droite (10) ou bien en un point (11).

12. Container selon l'une des revendications précédentes, **caractérisé en ce que** l'ouverture de sortie (4) située sur le manteau (5) du container (1) est pratiquée de telle façon que l'on puisse introduire dans l'ouverture de sortie une vis de décharge ou une hélice convoyeuse (12) en vue de la désagrégation et de l'extraction du contenu de remplissage (7).

13. Système de préparation de produits de remplissage pâteux, liquides, pulvérulents ou fluides (7) composé d'un container (1) selon l'une des revendications précédentes et additionnellement d'un dispositif convoyeur (13) en vue d'extraire le produit de remplissage du container.
